# EUROPEAN PATENT APPLICATION

(11) **EP 4 503 429 A1**
(43) Date of publication of application: **05.02.2025**
(21) Application number: 22933446.1
(22) Date of filing: 24.03.2022
(51) Int. Cl.: H02P 27/04, H02M 7/48

(54) **INVERTER DEVICE**

(71) Applicant: Carrier Japan Corporation, Tokyo 141-0032 (JP)
(72) Inventor: OGAWA, Junki, Fuji-shi, Shizuoka 416-8521 (JP); ISHIDA, Keiichi, Fuji-shi, Shizuoka 416-8521 (JP); MORIMOTO, Hiroyoshi, Fuji-shi, Shizuoka 416-8521 (JP); YAMASHITA, Hiroshi, Fuji-shi, Shizuoka 416-8521 (JP)
(74) Representative: Gramm, Lins & Partner Patent- und Rechtsanwälte PartGmbB
(86) International application number: PCT/JP2022/014166
(87) International publication number: WO 2023/181306

(57) **Abstract**

The inverter device includes a switching circuit connected to a motor having a plurality of phase windings and a controller configured to control the switching circuit. The switching circuit includes a plurality of series circuits of switch elements which are upstream and downstream along the direction of application of DC voltage, and each phase winding is connected to the mutual connection point of each switch element of these series circuits. The controller determines abnormality of each switch element according to a state of the current flowing between the switching circuit and the motor while sequentially switching a plurality of current paths through each switch element to the predetermined direction of each phase winding, and before switching each current path, a reverse phase voltage for counteracting the current flowing between the switching circuit and the motor is applied to each phase winding through each of the switch elements.

## Description

### Technical Field

Embodiments of the present application relate generally to an inverter device, connected to a motor with multiple phase windings.

### Background Art

An inverter device connected to a motor having multiple phase windings includes a switching circuit configured to convert DC voltage to AC voltage by switching. The switching circuit contains a plurality of series circuits of switch elements which are upstream and downstream along the direction of application of DC voltage. The interconnection points of each switch element in the series circuits are connected to each phase winding of the motor.

### Citation List

### Patent Literature

Patent Literature 1: JP 2019-187187 A

### Summary of Invention

### Technical Problem

If an abnormality such as an open failure or short-circuit failure occurs in any of the switch elements of the switching circuit, the motor cannot be driven properly.

The present application aims to provide an inverter which can accurately and quickly detect an abnormality in each switch element of a switching circuit when there is one.

### Means for Solving the Problem

The inverter device of an embodiment of the present application includes a switching circuit connected to a motor having a plurality of phase windings and a controller configured to control the switching circuit. The switching circuit includes a plurality of series circuits of switch elements which are upstream and downstream along the direction of application of DC voltage, and each phase winding is connected to the mutual connection point of each switch element of these series circuits. The controller determines abnormality of each switch element according to a state of the current flowing between the switching circuit and the motor while sequentially switching a plurality of current paths through each switch element to the predetermined direction of each phase winding; and before switching each current path, a reverse phase voltage for counteracting the current flowing between the switching circuit and the motor is applied to each phase winding through each of the switch elements.

### Brief Description of Drawings

FIG. 1 illustrates the structure of each embodiment.
FIG. 2 is a flowchart showing the control of a first embodiment.
FIG. 3 illustrates currents during W-phase check operation in each embodiment.
FIG. 4 illustrates switching patterns and current variations during W-phase check operation in each embodiment.
FIG. 5 illustrates currents during V-phase check operation in each embodiment.
FIG. 6 illustrates currents during U-phase check operation in each embodiment.
FIG. 7 illustrates currents during X-phase check operation in each embodiment.
FIG. 8 illustrates currents during Z-phase check operation in each embodiment.
FIG. 9 illustrates currents during Y-phase check operation in each embodiment.
FIG. 10 illustrates switching patterns of each phase check operation in each embodiment.
FIG. 11 illustrates switching patterns and current variations during each phase check operation in each embodiment.
FIG. 12 illustrates an example of the determination result of each embodiment.
FIG. 13 is a flowchart of the control of a second embodiment.

### Mode for Carrying Out Invention

### [1] First embodiment

The first embodiment of the present application will be described with reference to the drawings.

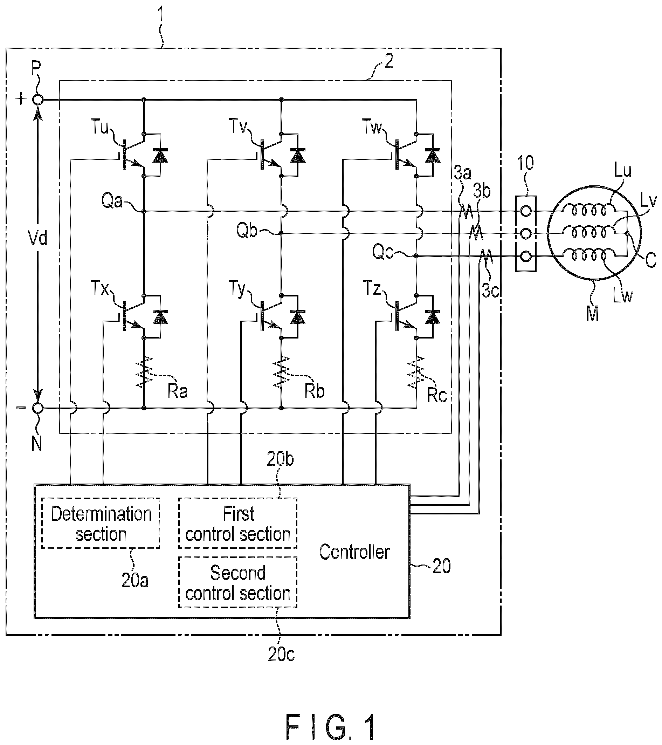

In FIG. 1, M is a brushless DC motor (will be abbreviated as motor) used as a compressor motor in an air conditioner, including a stator with three phase windings Lu, Lv, and Lw, star-connected around the neutral point C, and a rotor with a permanent magnet. The rotor is rotated by the interaction between the magnetic field created by the current flowing in the phase windings Lu, Lv, and Lw and the magnetic field created by the permanent magnet. Uncoupled ends of the phase windings Lu, Lv, and Lw are connected to the inverter 1 of the present embodiment via a motor terminals 10. The winding type of the motor M may be a delta-type.

The inverter device 1 includes input terminals P and N to which DC voltage Vd is applied, switching circuit 2 which receives the DC voltage Vd between the input terminals P and N and energizes the phase windings **Lu, Lv,** and Lw and switches energization therebetween, current sensors **3a, 3b,** 3c which detect currents (phase winding currents) flowing in current paths between the switching circuit 2 and the phase windings **Lu, Lv,** and **Lw,** and controller 20 which controls the switching circuit 2.

The switching circuit 2 includes a series circuit of switch elements Tu and Tx, which are upstream and downstream along the direction of application of DC voltage Vd, series circuit of switch elements Tv and Ty, which are upstream and downstream along the direction of application of DC voltage Vd, series circuit of switch elements Tw and Tz, which are upstream and downstream along the direction of application of DC voltage Vd.

The interconnection point (output terminal) Qa of the switch elements Tu and Tx is connected to the uncoupled end of the phase winding Lu via the motor terminal 10. The uncoupled end of the phase winding Lv is connected to the interconnection (output terminal) Qb of the switch elements Tv and Ty via the motor terminal 10. The uncoupled end of the phase windings Lw is connected to the interconnections (output terminals) Qc of the switch elements Tw and Tz via the motor terminals 10.

The controller 20 controls the starting and stopping of motor M through the switching circuit 2, detects an operating state based on the motor M phase winding currents, etc., and controls each switch element of the switching circuit 2 according to detection results, thereby operating motor M at target frequency. Furthermore, the controller 20 determines abnormality of the switching circuit 2 and the motor M before starting the motor M. The controller 20 includes a determination section 20a, first controller 20b, and second controller 20c as the main functions for the determination.

The determination section 20a switches a plurality of current paths (first to sixth current paths) through which current flows in a predetermined direction in the phase windings Lu, Lv, and Lw through the switch elements Tu to Tz of the switching circuit 2 sequentially for a fixed time t, while determining the switch elements Tu to Tz and the motor M according to the state of the current flowing between the switching circuit 2 and the motor M.

Before the switching of each of the above current paths (first to sixth paths) by the determination section 20a, the first controller 20b applies a reverse phase voltage to counteract the current flowing between the switching circuit 2 and the motor M through the switching elements Tu to Tz of the switching circuit 2 for a fixed time t, the same time set for the current path that was set immediately before the switchover.

The second controller 20c executes the determination by the determination section 20a before starting the motor M. If the result of the judgment indicates no abnormality, the motor M is started, and if the result of the determination indicates abnormality, the motor M is not started.

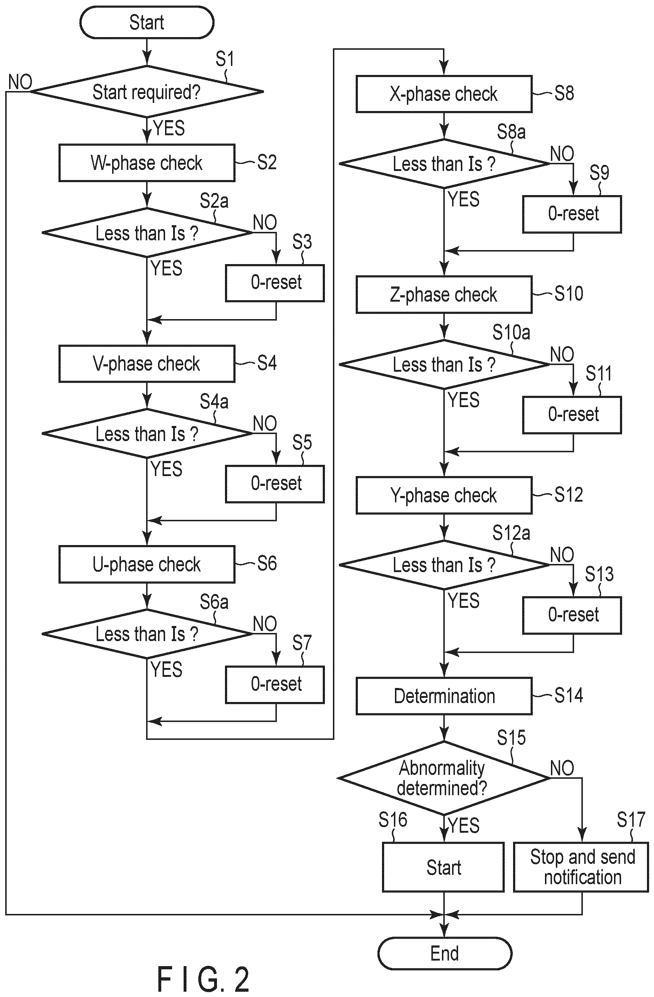

The control performed by the controller 20 will be described with reference to the flowchart of FIG. 2.

### (W-phase check operation)

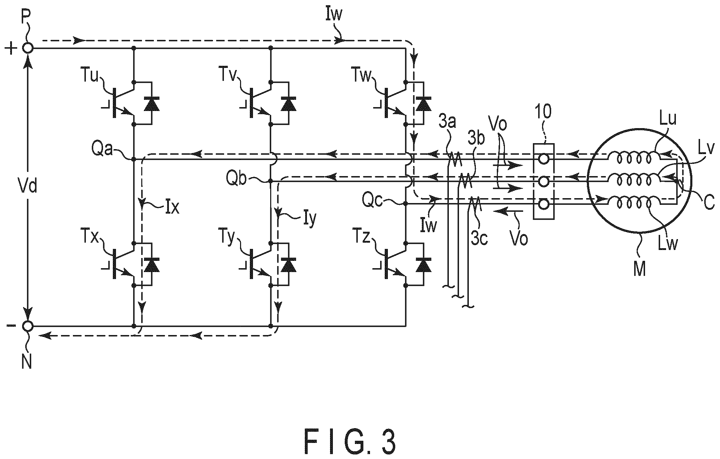

When the motor M is required to start (YES in S1), the controller 20 performs a W-phase check operation (S2). Specifically, the controller 20 supplies pulse-type gate signals to turn on the switch elements Tw, Tx, and Ty and turn off switch elements Tu, Tv, and Tz for a certain time t, in order to set, as shown by the dashed lines and arrows in FIG. 3, a first current path for W-phase checking wherein the current flows from a positive terminal P to switch elements Tw, to an interconnection point Qc, to phase winding Lw, to phase windings Lu and Lv, to interconnection points Qa and Qb, to switch elements Tx and Ty, and to negative terminal N. Then, the controller 20 monitors a state of the current flowing between the switching circuit 2 and the motor M with the current sensors 3a, 3b, and 3c while maintaining the monitoring results in an internal memory.

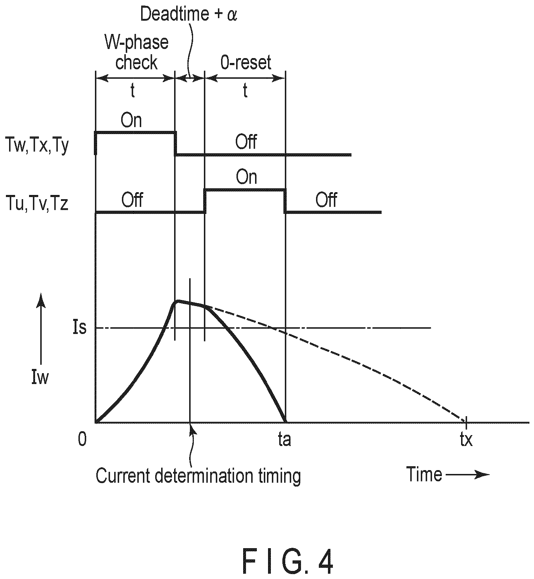

Following the W-phase check operation, the controller 20 determines whether the current flowing between the switching circuit 2 and the motor M, specifically the current Iw flowing in the W-phase to be checked, is below the threshold value Is shown in FIG. 4 (S2a). Note that by this W-phase check operation, the current Iw flowing in phase W is the largest value of the currents Iu to Iw in each phase winding. Note that the current flowing between the switching circuit 2 and the motor M in the present embodiment means the absolute value of the current value, regardless of the direction of flow. If the current is less than the threshold value Is (YES in S2a), the controller 20 determines in the determination step S14 described below as there is some abnormality and the current is not flowing. In this case, since the current is sufficiently small, the controller 20 moves to the next V-phase check operation (S4) without performing the 0-reset operation to attenuate the current as described below. The reason for omitting the 0-reset operation is that if the 0-reset operation is performed even though the current is small, current will be generated in the opposite direction in the motor winding and the next phase current check cannot be performed accurately.

If the current is greater than the threshold Is (NO in S2a), the controller 20 performs a 0 (zero) reset operation (S3) with a switching pattern opposite to the W phase check operation. Specifically, the controller 20 supplies pulse-like gate signals to turn on the switch elements Tu, Tv, and Tz and turn off the switch elements Tw, Tx, and Ty for approximately the same time as the set time (constant time t) of the first current path, to apply the reverse phase voltage Vo to the phase windings Lu, Lv, and Lw to counteract the current flowing between the switching circuit 2 and the motor M, as shown by the solid arrows in FIG. 3. The application of the reverse phase voltage Vo quickly attenuates the currents flowing between the switching circuit 2 and the motor M.

The switching between the W-phase check operation and the 0-reset operation and the change in the current Iw flowing from the switch element Tw to the phase winding Lw by the switching are shown in FIG. 4. "Deadtime + α" is secured between the W-phase check operation and the 0-reset operation, and the current determination timing is set to determine whether the current is less than the threshold value Is during the "dead time + α" time. Without the 0-reset operation, it takes time tx for the current Iw to drop to around 0 in normal operation, but with the 0-reset operation, the time required for the current Iw to drop to around 0 in normal operation can be reduced to time ta, which is much shorter than time tx. That is, the addition of the 0-reset operation shortens the time required to check for abnormalities before starting up the motor M. This allows the motor M to start operation quickly if it is normal.

Here, the time for adding the reverse phase voltage Vo by the 0-reset operation is set to a fixed time t, which is almost the same as the setting time of the current path by the previous check operation.

Thus, the current Iw can be reduced to almost "0" by canceling the currents generated by each energizing operation. If the energizing period of the 0-reset operation is shorter than that of the check operation, the current Iw cannot be fully reduced to "0" by the time difference. Conversely, if the energization period by the 0-reset operation is longer than the check operation, the current Iw exceeds "0" and the current flows in the reverse direction with respect to the check operation.

After the 0 reset operation, the controller 20 moves to a next V-phase check operation (S4).

### (V-phase check operation)

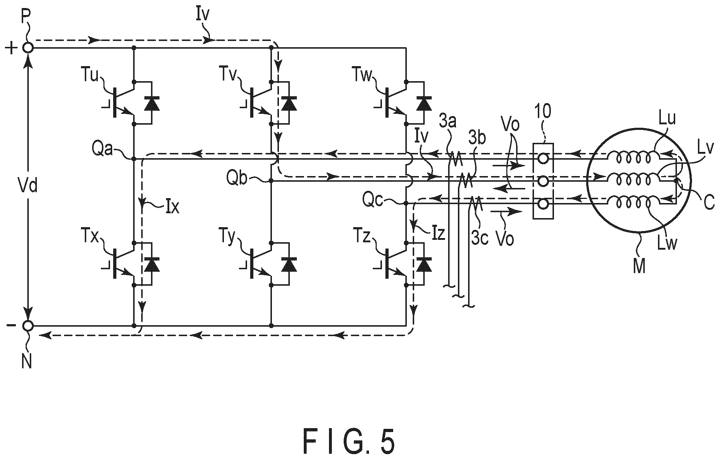

In the V-phase check operation (S4), the controller 20 supplies pulse-like gate signals which turns on switch elements Tv, Tx, and Tz and turns off switch elements Tu, Tw, and Ty for a fixed time t. Thus, as shown by dashed lines and arrows in FIG. 5, a second current path for V-phase checking is set where a current flows from positive terminal P to switch element Tv, to interconnect point Qb, to phase winding Lv, to phase windings Lu and Lw, to interconnection points Qa and Qc, to switch elements Tx and Tz, to negative terminal N. Then, the controller 20 monitors the state of the current flowing between the switching circuit 2 and the motor M with the current sensors 3a, 3b, and 3c while maintaining the monitoring results in the internal memory.

When switching to the V-phase check operation, either the current from the W-phase check operation is canceled by the 0-reset operation (S3) immediately before the switching, or the current is below the threshold Is in the W-phase check operation (YES in S2a), and the state of the current flowing between the switching circuit 2 and the motor M can be accurately monitored without being disturbed by the current from the W-phase check operation.

Following the V-phase check operation, the controller 20 determines whether the current Iv, which indicates the largest value, is in a state less than the threshold value Is (S4a). If the current is below the threshold value Is (YES in S4a), there is some abnormality in the V-phase check and the current is not flowing, and the controller 20 determines this in the determination step S14 described below. In this case, since the current flowing is sufficiently small, the controller 20 moves to the next U-phase check operation (S6) without performing a 0-reset operation to attenuate the current.

If the current is greater than the threshold Is (NO in S4a), the controller 20 executes a 0-reset operation with a switching pattern opposite to the V-phase check operation (S5). Specifically, the controller 20 turns on switch elements Tu, Tw, and Ty and turns off switch elements Tv, Tx, and Tz for approximately the same time as the set time (constant time t) of the second current path by supplying pulse-shaped gate signals, as shown by the solid arrows in FIG. 5, to apply the reverse phase voltage Vo to the phase windings Lu, Lv, and Lw to counteract the current between the switching circuit 2 and the motor M. The application of the reverse phase voltage Vo quickly attenuates the currents flowing between the switching circuit 2 and the motor M.

After the 0-reset operation, the controller 20 moves to the next U-phase check operation (S6).

### (U-phase check operation)

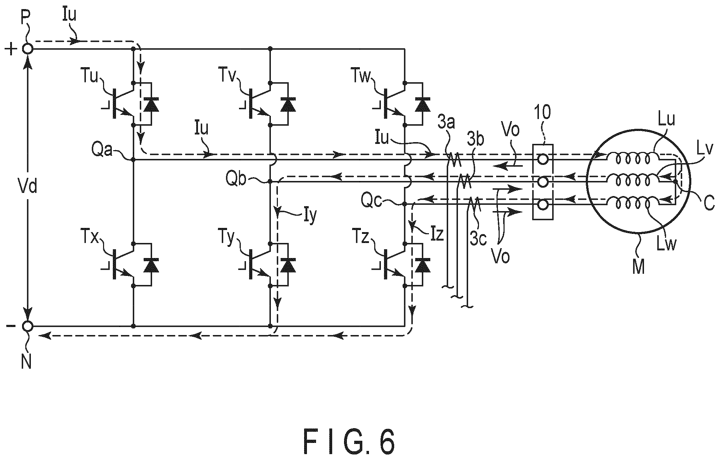

In the U-phase check operation (S6), the controller 20 supplies pulse-like gate signals to turn on switch elements Tu, Ty, and Tz and turn off switch elements Tv, Tw, and Tx over a fixed time t and thus, in order to set a third current path where current flows from the positive terminal P to the switch element Tu, to interconnection point Qa, to phase winding Lu, to phase winding Lv and Lw, to interconnection points Qb and Qc, to switch elements Ty and Tz, to negative terminal N, as shown by the dashed lines and arrows in FIG. 6. Then, the controller 20 monitors the state of the current flowing between the switching circuit 2 and the motor M with the current sensors 3a, 3b, and 3c while maintaining the monitoring results in the internal memory.

When switching to the U-phase check operation, either the current by the V-phase check operation is canceled by the 0-reset operation in S5 immediately before the switching, or the current is below the threshold Is in the V-phase check operation (YES in S4a). The state of the current flowing between the switching circuit 2 and the motor M can be accurately checked without being disturbed by the current from the V-phase check operation.

Following the U-phase check operation, the controller 20 determines whether the current flowing between the switching circuit 2 and the motor M is below the threshold value Is (S6a). If the current is below the threshold Is (YES in S6a), there is some abnormality in the U-phase check and no current is flowing, and the controller 20 determines the abnormality in the determination step (S14) described below. In this case, since the flowing current is sufficiently small, the controller 20 moves to the next U-phase check operation (S8) without performing a 0-reset operation to attenuate the current.

If the current is greater than the threshold Is (NO in S6a), the controller 20 executes a 0-reset operation with a switching pattern opposite to the U-phase check operation (S7). Specifically, the controller 20 turns on the switching elements Tv, Tw, and Tx and turns off the switching elements Tu, Ty, and Tz for approximately the same time as the setting time (constant time t) of the third current path by supplying a pulse-shaped gate signal, as shown by the solid arrows in FIG. 6, to apply a reverse phase voltage Vo to the phase windings Lu, Lv, and Lw, for counteracting the current flowing between the switching circuit 2 and the motor M. The application of the reverse phase voltage Vo quickly attenuates the currents flowing between the switching circuit 2 and the motor M.

After the 0-reset operation, the controller 20 moves to a next X-phase check operation (S8).

### (X phase check operation)

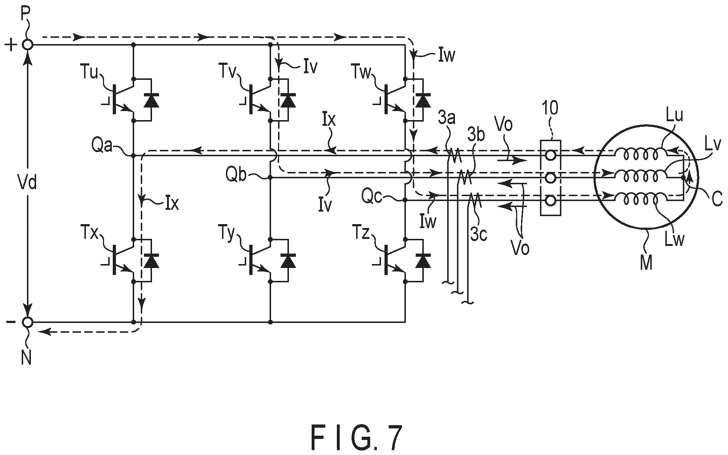

In the X-phase check operation (S8), the controller 20 supplies pulse-like gate signals to turn on switch elements Tv, Tw, and Tx and turn off switch elements Tu, Ty, and Tz for a fixed time t in order to set a fourth current path where current flows from the positive terminal P to switch elements Tv and Tw, to mutual connection points Qb and Qc, to phase windings Lv and Lw, to phase windings Lu, to mutual connection point Qa, to switch element Tx, to negative terminal N as shown by the broken lines and arrows in FIG. 7. Then, the controller 20 monitors the state of the current flowing between the switching circuit 2 and the motor M with the current sensors 3a, 3b, and 3c while maintaining the monitoring results in the internal memory.

When switching to the X-phase check operation, either the current from the U-phase check operation is canceled by performing the 0 reset operation in S7 immediately before switching, or the current is below the threshold Is in the U-phase check operation (YES in S6a), and thus, the state of the current flowing between the switching circuit 2 and the motor M can be accurately monitored without being disturbed by the current from the U-phase check operation.

Following the X phase check operation, the controller 20 determines whether the current flowing between the switching circuit 2 and the motor M is below the threshold Is (S8a). If the current is below the threshold Is (YES in S8a), the controller 20 moves to the next Z-phase check operation (S10) based on the determination that the current is small and will not affect the determination of the next phase check.

If the current is greater than the threshold Is (NO in S8a), the controller 20 executes a 0-reset operation with a switching pattern opposite to the X-phase check operation (S9). Specifically, the controller 20 supplies pulse-like gate signals to turn on switch elements Tu, Ty, and Tz and turn off switch elements Tv, Tw, and Tx for approximately the same time as the set time (constant time t) of the fourth current path, as shown by the solid arrows in FIG. 7, to apply the reverse phase voltage Vo for counteracting current between the switching circuit 2 and the motor M to the phase windings Lu, Lv, and Lw. The application of the reverse phase voltage Vo quickly attenuates the currents flowing between the switching circuit 2 and the motor M.

After the 0-reset operation, the controller 20 moves to a next Z-phase check operation (S10).

### (Z-phase check operation)

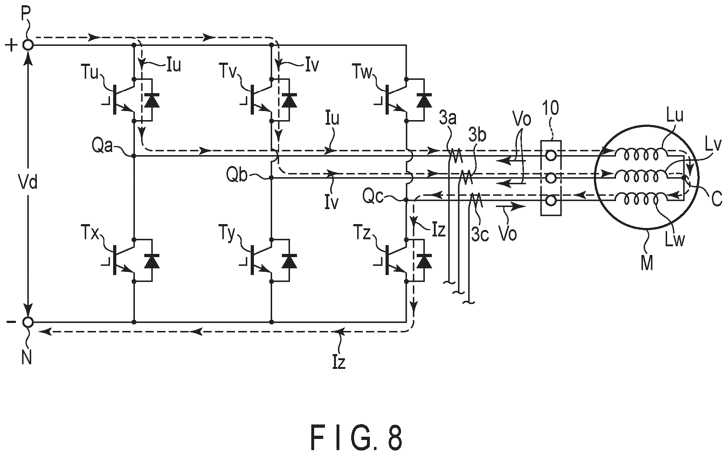

In the Z-phase check operation (S10), the controller 20 supplies pulse-like gate signals to turn on switch elements Tu, Tv, and Tz and turn off switch elements Tw, Tx, and Ty for a certain time t to set a fifth current path where the current flows from the positive terminal P to the switch elements Tu and Tv, to mutual connection points Qa and Qb, to phase windings Lu and Lv, to phase windings Lw, to mutual connection point Qc, to switch element Tz, to negative terminal N as shown by the broken lines and arrows in FIG. 8. Then, the controller 20 monitors the state of the current flowing between the switching circuit 2 and the motor M with the current sensors 3a, 3b, and 3c while maintaining the monitoring results in the internal memory.

When switching to the Z-phase check operation, either the current from the X-phase check operation has been canceled by the 0-reset operation of S9 immediately before, or the current is below the threshold Is in the X-phase check operation (YES in S8a), and the state of the current flowing between the switching circuit 2 and motor M can be accurately monitored without being disturbed by the current from the X-phase check operation. The state of the current flowing between the switching circuit 2 and the motor M can be accurately monitored without being disturbed by the current from the X-phase check operation.

Following the Z phase check operation, the controller 20 determines whether the current flowing between the switching circuit 2 and the motor M is below the threshold Is (S10a). If the current is below the threshold Is (YES in S10a), the controller 20 moves to the next Y-phase check operation (S12) based on the determination that the current is small and will not affect the determination of the next phase check.

If the current is greater than the threshold Is (NO in S10a), the controller 20 executes a 0-reset operation with a switching pattern opposite to the Z-phase check operation (S11). Specifically, the controller 20 supplies pulse-like gate signals to turn on switch elements Tw, Tx, and Ty and turn off switch elements Tu, Tv, and Tz for approximately the same time as the setting time (constant time t) of the fifth current path, as shown by the solid arrows in FIG. 8, in order to apply the reverse phase voltage Vo to counteract the current between the switching circuit 2 and the motor M to the phase windings Lu, Lv, and Lw. The application of the reverse phase voltage Vo quickly attenuates the currents flowing between the switching circuit 2 and the motor M.

After the 0 reset operation, the controller 20 moves to the next Y-phase check operation (S12).

### (Y-phase check operation)

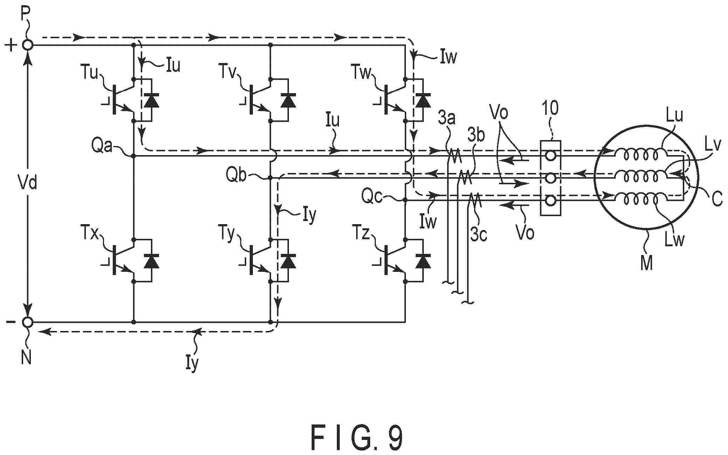

In the Y-phase check operation (S12), the controller 20 supplies pulse-like gate signals to turn on switch elements Tu, Tw and Ty and turn off switch elements Tv, Tx, and Tz for a certain time t to set a sixth current path where current flows from the positive terminal P to the switch elements Tu and Tw, to interconnection points Qa and Qc, to phase windings Lu and Lw, to phase windings Lv, to interconnection point Qb, to switch element Ty, to negative terminal N as shown by the broken lines and arrows in FIG. 9. Then, the controller 20 monitors the state of the current flowing between the switching circuit 2 and the motor M with the current sensors 3a, 3b, and 3c while maintaining the monitoring results in the internal memory.

When switching to the Y-phase check operation, either the current by the Z-phase check operation has been canceled by the 0-reset operation of S11 immediately before, or the current is below the threshold value Is in the X-phase check operation (YES in S10a), and the state of the current flowing between the switching circuit 2 and the motor M can be accurately monitored without being disturbed by the current from the Z-phase check operation.

Following the Y-phase check operation, the controller 20 determines whether the current flowing between the switching circuit 2 and the motor M is below the threshold Is (S12a). If the current is below the threshold Is (YES in S12a), the controller 20 moves to the next Y-phase check operation (S14) based on the determination that the current is sufficiently small.

If the current is greater than the threshold Is (NO in S12a), the controller 20 executes a 0-reset operation with a switching pattern opposite to the Y-phase check operation (S13). Specifically, the controller 20 supplies pulse-like gate signals to turn on switch elements Tv, Tx, and Tz and turn off switch elements Tu, Tw, and Ty for approximately the same time as the setting time (constant time t) of the sixth current path in order to apply the reverse phase voltage Vo to the phase windings Lu, Lv, and Lw to counteract the current flowing between the switching circuit 2 and the motor M , as shown by the solid arrows in FIG. 9. The application of the reverse phase voltage Vo quickly attenuates the currents flowing between the switching circuit 2 and the motor M.

After the 0-reset operation, the controller 20 moves to a next determination process (S14).

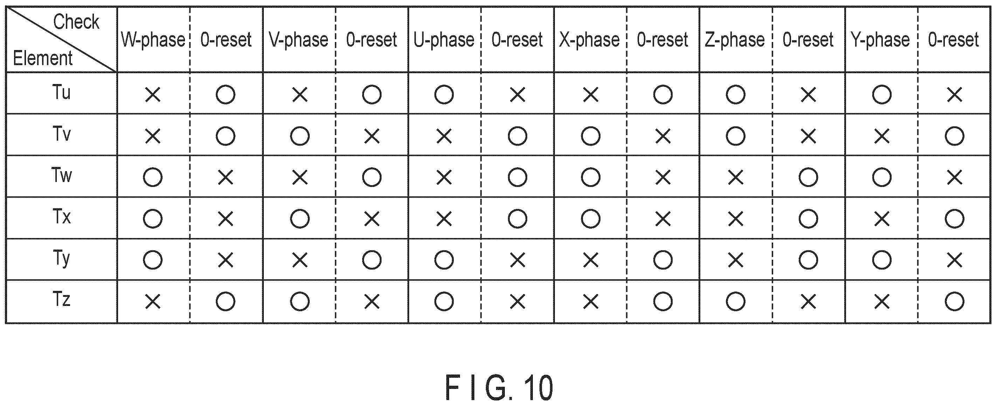

The switching patterns for each phase check operation described above are shown in FIG. 10.

### (Determination process)

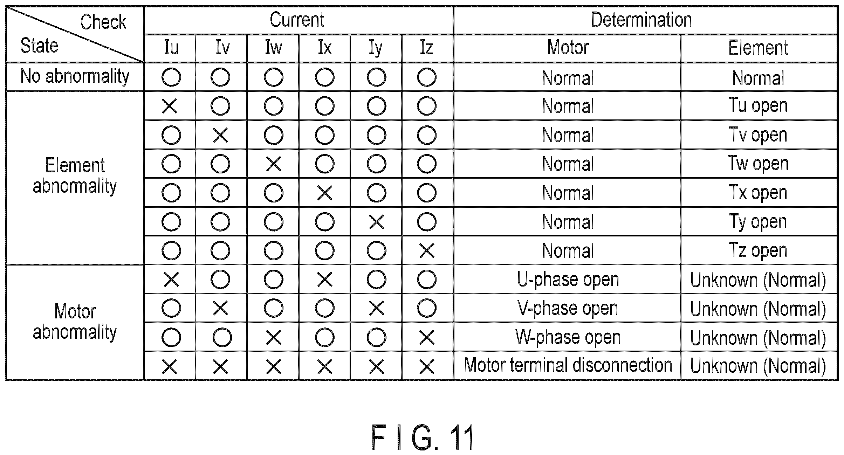

In the determination process (S14), the controller 20 determines the abnormality of switch elements Tu to Tz and the abnormality of motor M based on the current monitoring results in each phase check operation. An example of the determination results is shown in FIG. 11.

If the current Iu flowing through the switch element Tu cannot be detected despite the setting of the current path through the switch element Tu, the controller 20 determines that the switch element Tu has an open fault abnormality. If the current Iv flowing through the switch element Tv cannot be detected despite the setting of the current path through the switch element Tv, the controller 20 determines that the switch element Tv has an open fault abnormality. Similarly, if the currents Iw to Iz flowing through the switch elements Tw to Tz cannot be detected despite the setting of the current path through the switch elements Tw to Tz, the controller 20 determines that there is an open fault abnormality in the switch elements Tw to Tz.

If the current Iu flowing through the switch element Tu cannot be detected despite the setting of the current path through the switch element Tu, and if the current Ix flowing through the switch element Tx cannot be detected despite the setting of the current path through the switch element Tx, the controller 20 determines that there is an abnormality in the motor M phase winding Lu has an abnormality of disconnection, so-called U-phase open fault.

If the current Iv flowing through the switch element Tv cannot be detected despite the setting of the current path through the switch element Tv, and if the current Iy flowing through the switch element Ty cannot be detected despite the setting of the current path through the switch element Ty, the controller 20 determines that the phase winding Ly of the motor M has an abnormality of disconnection, so-called V-phase open fault.

If the current Iw flowing through the switch element Tw cannot be detected despite the setting of the current path through the switch element Tw, and if the current Iz flowing through the switch element Tz cannot be detected despite the setting of the current path through the switch element Tz, the controller 20 determines that the phase winding Lz of the motor M has an abnormality of disconnection, so-called W-phase open fault.

If the currents Iu to Iz flowing through the switch elements Tu to Tz cannot be detected despite the setting of the current path through the switch elements Tu to Tz, the controller 20 determines that there is an abnormality of disconnection at the motor terminal 10 between the switching circuit 2 and the motor M.

If there is no determination of the abnormalities (YES in S15), i.e., if it is determined to be normal, the controller 20 starts the motor M by switching the switching circuit 2 (S16).

If any abnormality is determined (NO in S15), the controller 20 does not start the motor M but keeps it stopped and informs the user, etc., of the contents of the abnormality, for example, through display or communication (S17). For example, the three major categories of "no abnormality", "element abnormality", and "motor abnormality" shown in the left column of FIG. 11 are reported. This allows a repair operator to prepare a replacement inverter circuit board if the report is "element abnormality", and to prepare a replacement motor if the report is "motor abnormality". Furthermore, the detailed contents of the abnormality determination results in the two right-hand columns of FIG. 11 may be displayed according to the operation, etc.

Note that, the magnitude of the current flowing in each phase check operation is greatly affected by the motor constant of the motor M, especially the R component of the phase windings. Therefore, it is preferable to set the constant time t, which is the setting time of the first to sixth current paths, considering the R component of the phase windings. Specifically, since the magnitude of the current is inversely proportional to the R component, the motor constant of motor M should be measured in advance, and when the R component becomes larger, the constant time t should be set longer.

### [2] Second embodiment

In each phase check operation of the first embodiment, if the switch elements Tu to Tz and the motor M are normal, three currents Iu, Iv, and Iw flow between the switching circuit 2 and the phase windings Lu, Lv, and Lw. The three currents Iu, Iv, and Iw differ from each other in flow direction depending on each phase check operation, and also differ from each other in magnitude depending on each phase check operation.

Considering the aforementioned point, in the second embodiment, as the method of abnormality determination in the determination section 20a, the three currents Iu, Iv, and Iw flowing between the switching circuit 2 and the phase windings Lu, Lv, and Lw are used for the monitoring results of the current of each phase check operation, and the magnitudes thereof are compared relatively in order to determine the abnormality of the switching elements Tu to Tz and the motor M.

The control performed by the controller 20 in the second embodiment will be described with reference to the flowchart in FIG. 2. A detailed description of the control similar to that of the first embodiment will be omitted.

### (W-phase check operation)

In the W-phase check operation (S2), the controller 20 sets a first current path for the W-phase check shown in FIG. 3 for a certain time t, as in the first embodiment. This setting causes the current Iw to flow from the uncoupled end of phase winding Lw to the coupled end (neutral point C), and the current through the phase winding Lw causes the current Iv and Iu to flow in the other direction from the coupled end (neutral point C) of phase windings Lv and Lu to the uncoupled end.

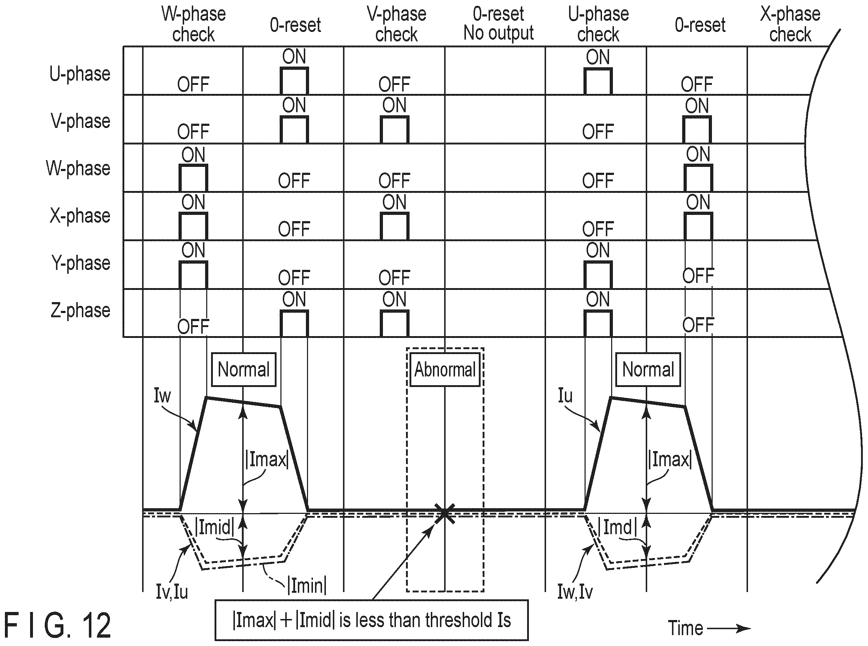

The direction and magnitude of the three currents Iw, Iv, and Iu are shown in FIG. 12. The current Iw has the maximum value Imax, and of the currents Iv and Iu, for example, the current Iv has the minimum value Imin and the current Iu has the middle value Imid.

The controller 20 monitors the state of the currents Iw, Iv, and Iu with current sensors 3a, 3b, and 3c while maintaining the monitoring results in an internal memory. In this monitoring, the controller 20 calculates the value Ia (=|Imax|+|Imid|), which is the sum of the absolute value |Imax| of the maximum value Imax and the absolute value |Imid| of the intermediate value Imid, and holds the calculation result in the internal memory.

Following the W-phase check operation, the controller 20 determines whether the sum value Ia is less than the threshold value Is (S2a). If the sum value Ia is less than the threshold value Is (Ia < Is) (YES in S2a), the condition is abnormal, the subsequent phase-W 0 reset operation is omitted, and the controller 20 moves to the next phase-V check operation (S4). If the sum value Ia is greater than the threshold value Is (NO in S2a), the controller 20 performs a 0-reset operation for the W phase check operation (S3). After the above 0-reset operation, the controller 20 moves to a next V-phase check operation (S4).

Note that, the threshold value Is in the first embodiment and the threshold value Is in the second embodiment are different. Since the second embodiment uses the sum of the two current values (sum value) Ia, the threshold value Is in the second embodiment is set to a value greater than the threshold value Is in the first embodiment.

### (V-phase check operation)

In the V-phase check operation (S4), the controller 20 sets a second current path for the W-phase check shown in FIG. 5 for a certain time t, as in the first embodiment. This setting causes a current Iv to flow from the uncoupled end of phase winding Lv to the coupled end (neutral point C), and the current through the phase winding Lv causes a current Iw and Iu to flow in the other direction from the coupled end (neutral point C) of phase windings Lw and Lu to the uncoupled end.

If there is an abnormality, the currents Iv, Iw, and Iu will remain near 0, as shown in FIG. 12. The controller 20 monitors the state of currents Iv, Iw, and Iu with current sensors 3a, 3b, and 3c while maintaining the monitoring results in the internal memory. In this monitoring, the controller 20 calculates the value Ia, which is the sum of the absolute value |Imax| of the maximum value Imax and the absolute value |Imid| of the intermediate value Imid, and holds the calculation result in the internal memory.

Following the V-phase check operation, the controller 20 determines whether the sum value Ia is below the threshold value Is (S4a). If the sum value Ia is below the threshold value Is (YES in S4a), the controller 20 moves to the next U-phase check operation (S6). If the sum value Ia is above the threshold Is (NO in S4a), the controller 20 performs a 0-reset operation (S5) with a switching pattern opposite to the W-phase check operation. After the 0-reset operation, the controller 20 moves to the next U-phase check operation (S6).

### (U-phase check operation)

In the U-phase check operation (S6), the controller 20 sets the third current path for the U-phase check shown in FIG. 6 for a certain time t, as in the first embodiment. This setting causes a current Iu to flow from the uncoupled end of phase winding Lu to the coupled end (neutral point C), and the current through the phase winding Lu causes currents Iw and Iv to flow in the other direction from the coupled end (neutral point C) of phase windings Lw and Lv to the uncoupled end.

The direction and magnitude of the three currents Iu, Iw, and Iv are shown in FIG. 12. The current Iu has the maximum value Imax, and of the currents Iw and Iv, for example, the current Iw has the minimum value Imin and the current Iv has the middle value Imid.

The controller 20 monitors the state of currents Iu, Iw, and Iv with current sensors 3a, 3b, and 3c while maintaining the monitoring results in the internal memory. In this monitoring, the controller 20 calculates the value Ia, which is the sum of the absolute value |Imax| of the maximum value Imax and the absolute value |Imid| of the intermediate value Imid, and holds the calculation result in the internal memory.

Following the U-phase check operation, the controller 20 determines whether the sum value Ia is below the threshold value Is (S6a). If the sum value Ia is below the threshold Is (YES in S6a), the controller 20 moves to the next X-phase check operation (S8). If the sum value Ia is above the threshold Is (NO in S6a), the controller 20 performs a 0-reset operation (S7) with a switching pattern opposite to the U-phase check operation. After the 0-reset operation, the controller 20 moves to the next X-phase check operation (S8).

The process up to this point is the same for the X-phase check operation (S8) through the Y-phase check operation (S12).

### (Determination process)

In the determination process (S14), the controller 20 determines the abnormalities of switch elements Tu to Tz and motor M based on the current monitoring results in each phase check operation.

After each phase check operation, the controller 20 calculates the sum of the absolute value |Imax| of the maximum value Imax and the absolute value |Imid| of the intermediate value Imid (=|Imax|+|Imid|) and maintains the calculation result in the internal memory.

If the value Ia of the sum Ia of the absolute value |Imax| of the maximum value Imax and the absolute value |Imid| of the intermediate value Imid is greater than the threshold value Is in all of the above-mentioned W phase check operation through Y phase check operation, the controller 20 determines that the switch elements Tw and Tu have no open abnormality and the phase windings Lw and Lu have no abnormality (YES in S15). In this case, the controller 20 starts the motor M by switching the switching circuit 2 (S16). At this time, "no abnormality" may be reported.

On the other hand, in the example shown in FIG. 12, the value Ia (=|Imax|+|Imidl) of the sum of the absolute value |Imax| of the maximum value Imax and the absolute value |Imid| of the intermediate value Imid is less than the threshold value Is in the V phase check operation. In this case, in the determination (S14), the controller 20 determines that there is an open abnormality in the switch element Tv or an abnormality in the phase winding Lv, and in the subsequent discrimination step S15, "abnormal" is determined (NO in S15). In this case, the controller 20 does not start the motor M but keeps it stopped and informs the outside world of the abnormality by, for example, display or communication (S17).

As described above, by comparing the magnitudes of the three currents Iu, Iv, and Iw flowing between the switching circuit 2 and the phase windings Lu, Lv, and Lw relatively and viewing the monitoring results of the currents in each phase check operation, even if the currents in each phase check operation are not so large due to the condition of the phase windings of the motor M, by using the absolute values of the sum of the current values of multiple phase windings for determination, the accuracy of determining abnormalities of switch elements Tu to Tz and motor M can be improved and determination can be made appropriately.

In other words, if the current during each phase check operation is not so large due to the condition of the phase winding of the motor M, etc., it may be difficult to properly determine the abnormality by comparing the current for one phase with the threshold value Is, but such a problem does not occur.

Note that, in the above structure, the sum of the absolute value |Imax| of the maximum Imax and the absolute value |Imid| of the intermediate Imid (=|Imax|+|Imid|) is compared with the threshold value Is. However, the sum Ia of the absolute value |Imax| of the maximum Imax and the absolute value |Imin| of the minimum Imin (=|Imax|+|Imin|) may be compared with the threshold value Is. It may also be structured to compare the sum of the three current values (=|Imax|+|Imid|+|Imin|) with the threshold value Is.

### [3] Third embodiment

In the third embodiment, the process of the first controller 20B of the controller 20 differs from that of the first embodiment. The other structures are the same as in the first embodiment.

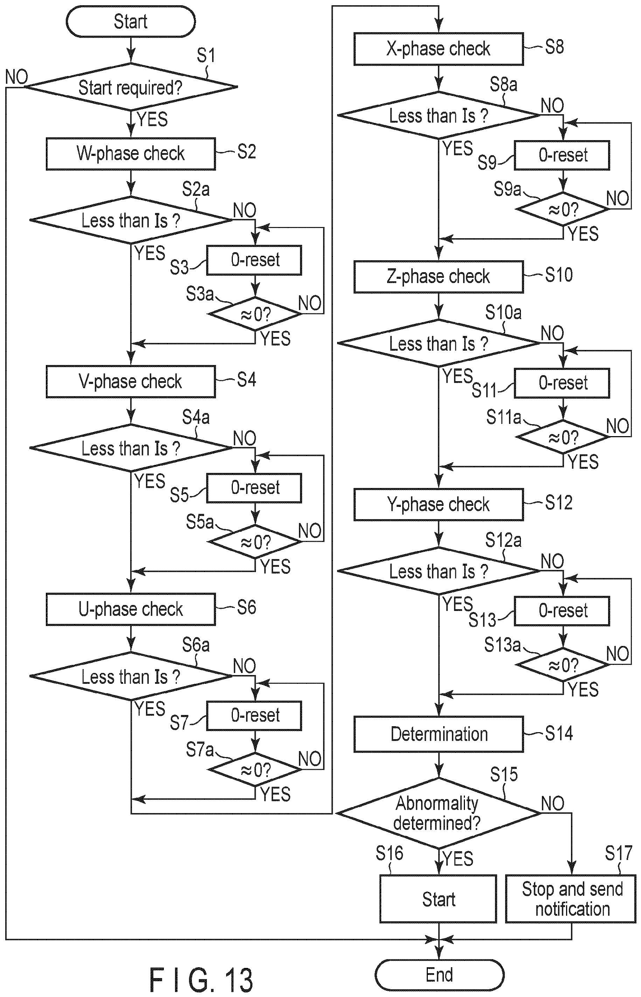

Before switching each current path (first to sixth current paths), the first controller 20b applies a counteracting reverse phase voltage to the current flowing between the switching circuit 2 and the motor M only when the current flowing between the switching circuit 2 and the motor M is above a threshold value, to the phase windings Lu, Lv, and Lw through the switch elements Tu to Tz of the switching circuit 2 only until the current flowing between the switching circuit 2 and the motor M is zero or approximately zero. In the third embodiment, unlike the first and second embodiments, the duration of the 0-reset operation is not a fixed constant time t, but is changed to an appropriate value depending on the state. The control performed by the controller 20 is shown in the flowchart in FIG. 13.

### (W-phase check operation)

If the current flowing between the switching circuit 2 and the motor M is above the threshold Is (NO in S2a) after executing the W-phase check operation in S2, the controller 20 starts the 0-reset operation (S3) and monitors whether the current flowing between the switching circuit 2 and the motor M has decayed to 0 or approximately 0 (S3a). Here, the current flowing between the switching circuit 2 and the motor M is suitably the highest phase current value, i.e. |Imax|, but no limitation is intended thereby and other phase currents can be used.

If the current has not decayed to 0 or approximately 0 (NO in S3a), the controller 20 continues the 0-reset operation in S3. If the current has decayed to 0 or approximately 0 (YES in S3a), the controller 20 moves to the next V-phase check operation (S4).

If the current flowing between the switching circuit 2 and the motor M is less than the threshold Is (YES in S2a), the controller 20 moves to the next V-phase check operation (S4) without performing the 0-reset operation in S3 based on the determination that the current flowing between the switching circuit 2 and the motor M is low.

### (V-phase check operation to Y-phase check operation)

In the subsequent V-phase check operation to Y-phase check operation, the same attenuation determination processes S5a, S7a, S9a, S11a, and S13a as S3a in the W-phase check operation are added. Since the determination processes are the same as each other, their explanations are omitted.

### [4] Variation

In each of the above embodiments, the case in which each phase check operation is performed in the order of phases W, V, U, X, Z, and Y is described as an example, but no limitation is intended thereby.

In each of the above embodiments, the state of the current flowing between the switching circuit 2 and the motor M is detected by current sensors 3a, 3b, and 3c. However, as shown in FIG. 1 with dashed lines, shunt resistors Ra, Rb, and Rc may be inserted and connected to the current paths of the switching elements Tx, Ty, and Tz, and the presence or absence of current in each current path may be detected by the voltage generated in the shunt resistors Ra, Rb, and Rc.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

### Reference sign list

1... inverter, 2 . . . switching circuit, 3a, 3b, 3c . . .current sensor, M . . .motor, 20 . . . controller, 20a . . . determination section, 20b ... first control section, 20c . . . second control section

## Claims

1. An inverter device connected to a motor with a plurality of phase windings, the inverter device comprising:
a switching circuit including a plurality of series circuits of switching elements of upstream and downstream along a direction of application of a direct current voltage, where each of the phase windings is connected to an interconnection point of each switching element of the series circuits; and
a controller configured to control the switching circuit, **characterized in that**
the controller is configured to determine, while sequentially switches a plurality of current paths where the current flows in a predetermined direction of each of the phase windings through each of the switching elements, an abnormality of each of the switching element according to a state of the current flowing the switching circuit and the motor, and
to apply, before switching of each of the current paths, a reverse-phase voltage to counteract the current flowing between the switching circuit and the motor to the each of the phase windings through each of the switching elements.

2. The inverter device of claim 1, wherein
the controller applies, before switching of each of the current paths, the reverse-phase voltage to counteract the current flowing between the switching circuit and the motor for a period of time equal to a set time of the current path set immediately before the switching, to each of the phase windings through each of the switching elements.

3. The inverter device of claim 1 or 2, wherein
the controller applies, before switching of each of the current paths, the reverse-phase voltage to counteract the current flowing between the switching circuit and the motor to each of the phase windings through each of the switching elements only if the current flowing between the switching circuit and the motor is above a threshold value.

4. The inverter device of claim 1 or 2, wherein
the controller applies, before switching of each of the current paths, the reverse-phase voltage to counteract the current flowing between the switching circuit and the motor to each of the phase windings through each of the switching elements only if the current flowing between the switching circuit and the motor is above a threshold value, until the current flowing therebetween becomes zero or approximately zero.

5. The inverter device of claim 1, wherein
the controller executes the determination before start of the motor, and if a result of the determination indicates no abnormality, the controller starts the motor, and if a result of the determination indicates abnormality, the controller does not start the motor.
